Europäisches Patentamt

European Patent Office

Office européen des brevets

(19)

(11) **EP 1 236 341 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **00987314.2**

(22) Anmeldetag: **28.11.2000**

(51) Int Cl.$^7$: **H04N 1/00**

(86) Internationale Anmeldenummer:
**PCT/EP00/11892**

(87) Internationale Veröffentlichungsnummer:
**WO 01/041422 (07.06.2001 Gazette 2001/23)**

(54) **BILDAUFNAHMEVORRICHTUNG UND VERFAHREN ZUR KORREKTUR DER ABTASTWERTE DER BILDAUNAHMEVORRICHTUNG**

IMAGE RECORDING DEVICE AND METHOD FOR CORRECTING THE SCANNING VALUES OF SAID IMAGE RECORDING DEVICE

DISPOSITIF DE PRISE DE VUE ET PROCEDE DE CORRECTION DES VALEURS D'ECHANTILLONNAGE DU DISPOSITIF DE PRISE DE VUE

(84) Benannte Vertragsstaaten:
**DE FR GB**

(30) Priorität: **29.11.1999 DE 19957297**

(43) Veröffentlichungstag der Anmeldung:
**04.09.2002 Patentblatt 2002/36**

(73) Patentinhaber: **CGK Computer Gesellschaft Konstanz mbH**
**78467 Konstanz (DE)**

(72) Erfinder: **SORGIUS, Helmut**
**78467 Konstanz (DE)**

(74) Vertreter: **Schaumburg, Karl-Heinz Patentanwälte**
**Schaumburg, Thoenes, Thurn,**
**Postfach 86 07 48**
**81634 München (DE)**

(56) Entgegenhaltungen:
**EP-A- 0 296 806        EP-A- 0 439 357**

EP 1 236 341 B1

**Beschreibung**

Die Erfindung betrifft eine Bildaufnahmevorrichtung und ein Verfahren zur Korrektur von Abtastwerten der Bildaufnahmevorrichtung. Insbesondere betrifft die Erfindung eine Bildaufnahmevorrichtung mit einem Sensor mit einer Vielzahl von Sensorelementen und einer Steuerung zur Steuerung des Sensors und zur Verarbeitung von durch die Sensorelemente erhaltener Abtastwerte einer Vorlage, wobei die Steuerung derart ausgestaltet ist, dass sie die durch Unregelmässigkeiten der Sensorelemente und durch Randabdunklung verursachte Helligkeitsunterschiede der Abtastwerte ausgleicht, wobei sie erste Korrekturwerte für ein jedes Sensorelement beruhend auf Muster-Abtastwerten einer Muster-Vorlage berechnet. Darüber hinaus betrifft die Erfindung ein Verfahren zur Korrektur der Abtastwerte einer Bildaufnahmevorrichtung des oben genannten Typs.

Bei der Abtastung einer Vorlage durch eine Bildaufnahmevorrichtung, beispielsweise einen Flachbettscanner oder ähnliches, werden bei bekannten Vorrichtungen die Rohabtastwerte einer Vorlage korrigiert, um verschiedene Einflüsse des Sensors und der Optik auszugleichen. So ist unter anderem darauf zu achten, dass die Empfindlichkeiten benachbarter Photozellen in Abhängigkeit des verwendeten Sensortyps um bis zu 20% differieren können. Um diesen Effekt auszugleichen, wurde üblicherweise eine Muster-Vorlage abgetastet. Bei einem Zeilensensor mit einer CCD-Vorrichtung (Charge Coupled Device, Ladungsgekoppelte Vorrichtung) reicht die Abtastung einer oder weniger Zeilen einer weissen Vorlage aus. Anhand dieser Muster-Abtastwerte kann dann für jede einzelne Photozelle ein Korrekturwert berechnet werden. Der Korrekturwert der einzelnen Photozelle nomiert den gemessenen Muster-Abtastwert, beziehungsweise einen Soll-Abtastwert, beispielsweise mit der folgenden Gleichung:

$$Korr = Vid_{Max} / Vid_{Ref}$$

Mit

Korr = Korrekturfaktor
$Vid_{Max}$ = maximal erreichbarer Videowert (für Weiß) z.B. 255 in einem 8 Bit-System
$Vid_{Ref}$ = Referenzwert des Sensorpixels bei Muster-Vorlage.

Darüber hinaus kann auch eine Korrektur für den minimal erreichbaren Videowert (für Schwarz) durchgeführt werden, indem der Dunkelabtastwert von dem nicht korrigierten Muster-Abtastwert abgezogen wird.

Dieses Verfahren ist nicht nur auf Zeilensensoren, bei denen die Photozellen in einer Zeile angeordnet sind, sondern auch auf Flächensensoren (Area-CCD) anwendbar, wobei hierfür üblicherweise alle Photozellen des Flächensensors so behandelt werden, wie die Photozellen eines Zeilensensors. Man spricht in diesem Zusammenhang von einer Photo Response Non-Uniformity-Korrektur (PRNU-Korrektur). Durch dieses verfahren werden für jede Photozelle des Sensors entsprechende erste Korrekturwerte erhalten, die in einem geeigneten Speicher, beispielsweise einem RAM-Speicher (Random Accesss Memory) gespeichert werden. Beim Abtasten einer echten Vorlage wird dann der Abtastwert jeder Photozelle für jede Zeile entsprechend der oben angegebenen Gleichung, möglicherweise unter Berücksichtigung des Dunkelabtaststroms, korrigiert. EP-A-0439357 offenbart ein solches Verfahren.

Eine weitere Einflussgrösse auf den Helligkeitswert eines Abtastwertes ist das sogenannte "Shading", also der Randdunkelabfall. Am Bildrand eines Scanners kann aufgrund von optischen Einflüssen ein Helligkeitsabfall beobachtet werden. Rein mathematisch gesehen, ist diese Randabdunklung proportional dem $Cos^4$ des Abbildungswinkels. Diese Beziehung gilt allerdings nur exakt nur bei idealen Systemen mit beispielsweise unendlich langer Belichtung über den abzutastenden Gegenstand hinaus. In der Praxis gilt dieser Wert nur für sehr kleine Winkel bei großzügig ausgelegter Beleuchtung. Durch die endliche Abmessung der Lampe ist der Helligkeitsabfall am Rande meist noch größer.

Insbesondere bei lichtschwachen Systemen mit großer Bildöffnung ist der Randabfall beachtlich. Der Effekt ist beispielsweise auch von alten Fotografien bekannt, bei denen sich in der Mitte ein heller Kreis zeigt, während nach Außen die Helligkeit deutlich abnimmt. Insbesondere in den Ecken eines Bildes ist dieser Effekt beachtlich.

Bekannte Scanner mit der Möglichkeit zur Korrektur der Randabdunklung bauen auf dem vorbeschriebenen Korrekturverfahren für die PRNU-Korrektur auf (Siehe EP-A-0 296 806) Diese wird in Folgendem am Beispiel eines Flachbettscanners beschrieben.

Zu Beginn tastet der Scanner ein vollständig weiße Muster-Vorlage über die Gesamtheit seines Abtastungsfeldes ab. Hierbei fährt er üblicherweise die Beleuchtungseinrichtung in der Unterabtastrichtung vom Anfang der Vorlage bis zum Ende der Vorlage durch. Während der Bewegung der Lampe tastet ein Zeilensensor oder ein kleiner Flächensensor, der einige wenige Zeilen umfasst, die Vorlage schrittweise ab. Auf diese Art werden für die gesamte Muster-Vorlage Muster-Abtastwerte werden Korrekturwerte entsprechend dem oben beschriebenen Verfahren berechnet und gespeichert. Beim Abtasten einer reellen Vorlage werden die Abtastwerte mit den so gewonnenen Korrekturwerten korrigiert.

Der Nachteil hierbei ist, dass die Zahl der Korrekturwerte nun sehr stark erhöht, da nicht für jede Photozelle ein Korrekturwert vorliegt, sondern für jeden Bildpunkt oder Pixel der Muster-Vorlage.

$$Vid_{Korr\ n.m} = Vid_{Roh\ n.m} *VidMax / Vid_{Ref\ m}$$

Mit:

n = Zeilennummer
m = Pixelnummer in der Zeile
Vid Roh = Videowert aus Kamera
Vid Max = maximal erreichbarer Videowert (für Weiß) z.B. 255 in einem 8 Bit-System
Vid Ref = Referenzwert des Sensorpixels bei Muster-Vorlage

Die oben genannte Gleichung zeigt die Berechnung des korrigierten Abtastwertes bei diesem Korrekturverfahren.

Wie erwähnt, benötigt dieses Verfahren eine sehr große Anzahl von Korrekturwerten. Das Verfahren wird dadurch umständlich und langsam, so dass bei der Abtastung großer Vorlagen, beispielsweise DIN A3, mit hoher Auflösung eine Bearbeitung vernünftigen Zeitspannen nicht möglich ist.

Die oben genannten Korrekturverfahren können sowohl durch analoge Schaltungen als auch durch digitale Bildverarbeitung durchgeführt werden.

Ein anderer Ansatz geht davon aus, die Ursachen der Randabdunklung zu beseitigen. Hierzu kann eine kleinere Blende verwendet werden. Der Nachteil hierbei ist allerdings, dass auch die in der Bildmitte erreichbare Helligkeit deutlich abnimmt. Außerdem muß nach wie vor die PRNU-Korrektur durchgeführt werden.

Ein weiterer Ansatz ist es, den Blickwinkel zu verkleinern. Dies geschieht beispielsweise durch Verlängerung der Brennweite des Objektivs bei gleichbleibendem Maßstab. Die Blickwinkelverkleinerung schlägt sich über dem Cos[4] des Winkels direkt auf den Helligkeitsabfall am Bildrand nieder. In der Praxis wird normalerweise bei gegebener Einbaulänge die maximale Brennweite ausgewählt. Auch dieses Verfahren erfordert eine zusätzliche PRNU-Korrektur.

Aufgabe der Erfindung ist es, eine neue, verbesserte Bildaufnahmevorrichtung bereitzustellen. Eine weitere Aufgabe der Erfindung ist es, ein verbessertes Verfahren zur Korrektur der Abtastwerte für eine Bildaufnahmevorrichtung bereitzustellen.

Erfindungsgemäß werden diese Aufgaben durch die Vorrichtung nach Anspruch 1 beziehungsweise das Verfahren nach Anspruch 6 gelöst. Die abhängigen Ansprüche betreffen weitere vorteilhafte Ausgestaltungen der Erfindung.

Ein wichtiger Vorteil der Erfindung ist es, dass die erfindungsgemäße Vorrichtung beziehungsweise das erfindungsgemäße Verfahren mit deutlich geringeren Speichererfordernissen und verringertem Zeitaufwand eine qualitativ hochwertige Korrektur der Abtastwerte sowohl bezüglich der Randabdunklung als auch der Empfindlichkeitsunterschiede der einzelnen Photozellen durchführen können.

Die erfindungsgemäße Bildaufnahmevorrichtung weist einen Sensor mit einer Vielzahl von Sensorzellen und eine Steuerung auf, um den Sensor zu steuern und um Abtastwerte einer Vorlage zu verarbeiten, die von den Sensorelementen des Sensors erhalten wurden. Die Steuerung ist ausgestaltet, um die durch Unregelmäßigkeiten der Sensorelemente und durch Randabdunklung verursachten Helligkeitsunterschiede der Abtastwerte auszugleichen und um erste Korrekturwerte für ein jedes Sensorelement beruhend auf Muster-Abtastwerten einer Muster-Vorlage zu berechnen. Erfindungsgemäß ist die Steuerung darüber hinaus ausgebildet, um zweite Korrekturwerte für eine Vielzahl benachbarter Abtastwerte beruhend auf mit den ersten Korrekturwerten bereits korrigierten Muster-Abtastwerten zu berechnen, und um die Abtastwerte der Vorlage mit den ersten und zweiten Korrekturwerten zu korrigieren.

Die Erfindung beruht darauf, dass die Randabdunklung sich von einer Photozelle zur nächsten beziehungsweise von einer Zeile zur nächsten nur wenig ändert. Deshalb ist es möglich, für ganze Gruppen benachbarter Abtastwerte den gleichen Korrekturwert bezüglich der Randabdunklung zu verwenden. Auf diese Art können die Speicheranforderungen an die Vorrichtung beachtlich verringert werden.

Entsprechend einem vorteilhaften Aspekt der erfindungsgemäßen Bildaufnahmevorrichtung sind die zweiten Korrekturwerte einfache Vorzeichen mit der Größe eines Bits, die die Änderungsrichtung der zweiten Korrekturwerte angeben. Beispielsweise zeigt ein positives Vorzeichen an, dass der Helligkeitswert zu erhöhen ist, während ein negatives Vorzeichen eine Verringerung anzeigt. Das Ausmaß der Veränderung mit jedem Schritt ist durch einen Differenzwert fest vorgegeben.

Diese Art der Darstellung des Korrekturwertes reduziert Weiter die Speicheranforderung und beschleunigt die Verarbeitung deutlich.

Wenn das Vorzeichen nur binär, d.h. also nur Plus oder Minus, angezeigt wird, ist es nicht möglich, den Korrekturwert konstant zu halten. Deshalb ist entsprechend einer vorteilhaften Ausführungsform vorgesehen, dass eine Änderung des Korrekturwertes nur dann durchgeführt wird, wenn zwei aufeinander folgende Korrekturwerte das gleiche Vorzeichen haben.

Vorzugsweise sind die Sensorelemente der Bildaufnahmevorrichtung die Photozellen eines CCD-Zeilen oder Flächensensors.

Entsprechend einem weiteren vorteilhaften Aspekt, ist die Bildaufnahmevorrichtung als Flachbettscanner ausgestaltet.

Entsprechend dem erfindungsgemäßen Verfahren zur Korrektur der Abtastwerte einer Bildaufnahmevorrichtung sind die Schritte vorgesehen:

Aufnahme von Muster-Abtastwerten einer Muster-Vorlage,
Berechnen erster Korrektuerwerte für jedes Sensorelement der Bildaufnahmevorrichtung, um Helligkeitsunterschiede aufgrund unterschiedlicher Empfindlichkeit der einzelnen Sensorelemente auszugleichen,
Berechnen zweiter Korrekturwerte für jeweils eine Vielzahl benachbarter Abtastwerte, beruhend auf mit den ersten Korrekturwerten korrigierten Muster-Abtastwerten, um Helligkeitsunterschiede aufgrund der Randabdunklung auszugleichen, und
Korrektur der Abtastwerte einer Vorlage mittels der ersten und der zweiten Korrekturwerte.

Dieses erfindungsgemäße Verfahren kann in vorteilhafter Weise auf einem von der Bildaufnahmevorrichtung getrennten Host-Computer durchgeführt werden, dem die nicht korrigierten Bildabtastwerte und die Muster-Abtastwerte zugeführt wurden. Dieser eröffnet die Möglichkeit, die Korrektur eines Bildes durchzuführen, während die Bildaufnahmevorrichtung bereits das nächste Bild abtastet.

Entsprechend einem weiteren vorteilhaften Aspekt des erfindungsgemäßen Verfahrens sind die zweiten Korrekturwerte einbinäre Vorzeichenwerte, die die Änderungsrichtung der zweiten Korrekturwerte um eine vorgegebene Differenz anzeigen.

Um dennoch bei dieser einbinären Darstellung der zweiten Korrekturwerte ein Beibehalten der Korrekturwerte auf konstantem Niveau zu ermöglichen, kann vorgesehen sein, eine Änderung des Korrekturwertes nur dann vorzunehmen, wenn zwei aufeinander folgende zweite Korrekturwerte das gleiche Vorzeichen anzeigen.

Entsprechend einem weiteren vorteilhaften Aspekt des Verfahrens sind die Sensorelemente Photozellen eines CCD-Zeilen beziehungsweise Flächensensors.

Vorzugsweise wird das erfindungsgemäße Verfahren im Zusammenhang mit einem Flachbettscanner ausgeführt.

Entsprechend einem besonderen vorteilhaften Aspekt des erfindungsgemäßen Verfahrens wird die Korrektur beruhend auf folgender Gleichung durchgeführt:

$$Vid_{Korr/n.m} = (Vid_{Roh/n.m} - Ref_{Schwarz/m})\, Vid_{max} / Ref_{weiß/n.m}$$

wobei:

$Vid_{Korr/n.m}$ der korrigierte Abtastwert an der Stelle n,m
$Vid_{Roh/n.m}$ der nicht korrigierte Abtastwert an der Stelle n,m
$Ref_{Schwarz/m}$ der Dunkelstromwert des m.Sensorelements, und
$Vid_{max}$ der maximal Wert aller Muster-Abtastwerte sind,

und wobei

$$Ref_{weiß/n.m} = Vid_{ref/m} + k_n\, \delta$$

ist, und wobei

$Vid_{ref/m}$ der Muster-Abtastwert des m. Sensorelementes
$k_n$ der Wert der Aufsummierten zweiten Korrekturwerte für die Abtastwerte der n. Gruppe und
$\delta$ der Differenzwert sind.

Mit diesem Korrekturverfahren wird gleichzeitig der Dunkelabtastwert sowie der Weißwert korrigiert.

Ausführungsbeispiele der Erfindung ergeben sich aus der folgenden Beschreibung im Zusammenhang mit den beiliegenden Zeichnungen. Es zeigen:

Figur 1     eine Seitenansicht einer erfindungsgemäßen Bildaufnahmevorrichtung; und
Figur 2     eine Blockdiagramm der in der erfindungsgemäßen Bildaufnahmevorrichtung verwendeten Schaltung.

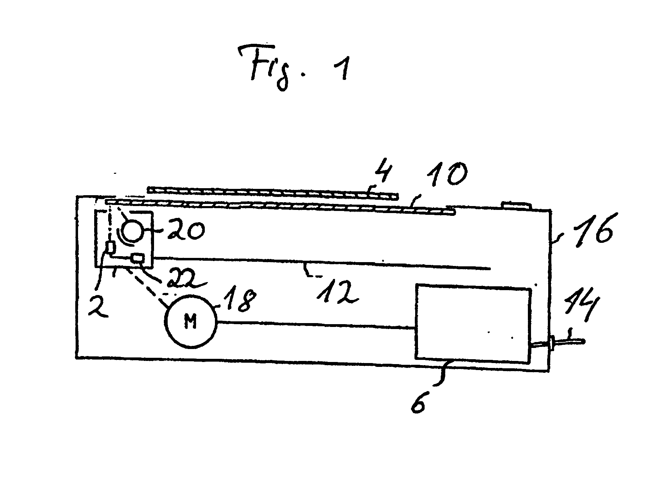

Die in Figur 1 gezeigte Bildaufnahmevorrichtung 16 enthält einen Sensor 2, der mit einem Verstärker 22 verbunden ist. Der Verstärker 22 besteht aus einer Vielzahl linear angeordneter Sensorelemente 8, die in den Figuren nicht weiter gezeigt sind. Darüber hinaus enthält die Bildaufnahmevorrichtung 16 eine Lampe 20, die zusammen mit dem Sensor 2 und dem Verstärker 22 von einem Motor 18 entlang einer Schiene 12 bewegt wird. Die Bildaufnahmevorrichtung 16 enthält darüber hinaus eine Steuerung 6 und eine Ausgangsleitung 14 zur Ausgabe von Daten an ein Bildausgabegerät. Eine Vorlage 4 wird auf einen Vorlagehalter, beispielsweise eine Glasplatte 10 gelegt. Unter der Kontrolle der Steuerung 6 treibt der Motor 18 den Sensor 2 zusammen mit der Lampe 20 und dem Verstärker 22 entlang der Schiene 12 an, wobei die Vorlage 4 zeilenweise abgetastet wird.

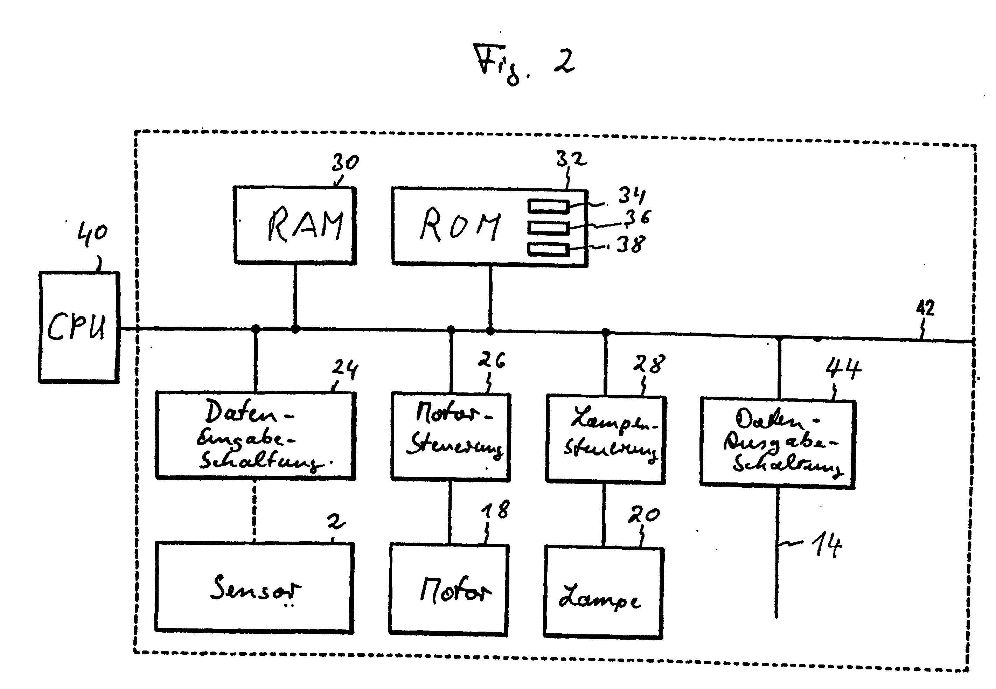

Figur 2 zeigt detaillierter Einzelheiten der Steuerung 6. Diese umfasst vorzugsweise eine zentrale Verarbeitungseinheit (CPU) 40, sowie Speichereinheiten 30 und 32. Einer der Speicher, der Speicher 32 ist als Nur-Lesespeicher (ROM) ausgestaltet. In diesem Speicher sind an den Speicherplätzen 34, 36 und 38 in nicht zu überschreibender Art die Steuerprogramme für die eine Motorsteuerung 26, eine Lampensteuerung 28 sowie eine Datenausgabeschaltung 44 gespeichert. Der ebenfalls gezeigte zweite Speicher 30, der als Direktzugriffsspeicher (RAM) ausgebildet ist, ist vorgesehen, um die Abtastwerte und die Korrekturwerte zu speichern.

Die erfindungsgemäße Steuerung 6 enthält darüber hinaus eine Dateneingabeschaltung 24, über die die vom Sensor 2 erhaltenen Daten eingegeben werden, und eine Datenausgabeschaltung 44, die die korrigierten Daten über die Ausgangsleitung 14 zur Weiterverarbeitung an einen Computer oder Drucker weiterreicht. Die Verarbeitungseinheit 40 ist mit den Elementen der Steuerung 6 über einen Datenbus 42 verbunden.

Wie vorangehend erwähnt wurde, nutzt die erfindungsgemäße Vorrichtung und das erfindungsgemäße Verfahren aus, dass die beiden zu korrigierenden Effekte, nämlich die Randabdunklung und die Empfindlichkeitsschwankung der einzelnen Photozellen die sich stark unterscheidende Änderungsgeschwindigkeiten haben. Wie erwähnt, kann sich die Empfindlichkeit von Photozelle zu Photozelle um 20% unterscheiden, wohingegen die Randabdunklung zwischen benachbarten Photozellen oder benachbarten Abtastzeilen sich nur sehr wenig unterscheidet.

Anders gesagt, die Randabdunklung ist bei üblicherweise eingesetzter Beleuchtung ein Helligkeitsverlauf, der sich über die beiden Ortskoordinaten der Vorlage nur sehr langsam ändert. Er zeigt ein stetiges Verhalten, das als "Tiefpassver-halten" bezeichnet werden kann. Den PRNU, also die Empfindlichkeitsschwankung der einzelnen Photozellen, kann sich im Gegensatz dazu von Pixel zu Pixel innerhalb bestimmter sensorabhängiger Grenzen drastisch ändern. Jedoch ist für ein und dieselbe Photozelle des Bildsensors die Größe konstant.

Diese unterschiedliche Verhalten ermöglicht, die beiden Effekte getrennt voneinander zu bewerten und zu korrigieren.

Hierzu wird zunächst eine Muster-Vorlage auf der Ablagefläche 10 des Scanners abgelegt. Der Sensor tastet dann zunächst eine "echte" Referenzzeile ab. Diese Referenzzeile umfasst eine oder wenige Abtastzeilen. Auf diese Art kann für jede Photozelle des Sensors 2 ein bzw. einige wenige Muster-Abtastwerte gewonnen werden. Dieser Muster-Abtastwert bzw. der Mittelwert der Muster-Abtastwerte für eine Photozelle, werden verwendet, um den Dunkelabtastungsfehler und den PRNU-Fehler für jede Photozelle einzeln zu korrigieren.

Hierzu werden für jede Photozelle erste Korrekturwerte durch die CPU 40 berechnet und in die RAM 30 gespeichert.

Da die abgetastete echte Referenzzeile der Muster-Vorlage möglicherweise ebenfalls eine Randabdunklung zeigt, die aber nicht getrennt erfasst werden kann, wird diese automatisch durch die Korrektur der Abtastwerte der einzelnen Photozellen mit korrigiert.

Die Randabdunklung über den Beleg kann nun getrennt von der Helligkeitsschwankung aufgrund der unterschiedlichen Empfindlichkeit der Photozellen ermittelt werden. Da sich die Randabdunklung nur langsam und stetig ändert, genügt es, in größeren Abständen einzelne Zeilen der Muster-Vorlage abzutasten, die Abtastwerte mit den ersten Korrekturwerten zu korrigieren, und aus der Abweichung der korrigierten Werte von den erwarteten Werten für die Muster-Vorlage zweite Korrekturwerte zu bestimmen. Diese zweiten Korrekturwerte können dann jeweils für eine Vielzahl benachbarter Abtastwerte verwendet werden. Vorzugsweise sind die Abstände bei der Abtastung der Muster-Vorlage ein Vielfaches der Pixelgröße in Zeilen und Transportrichtung.

Vorzugsweise wird nicht der genaue Korrekturwert gespeichert. Es ist hinreichend, das Vorzeichen der Änderung zum vorangehenden Korrekturwert abzuspeichern. Auf diese Art kann bei einem späteren Scannvorgang der eigentliche Korrekturwert mit einer minimalen Datenmenge schnell rekonstruiert werden. Diese Art der Korrektur ist, wie dargelegt, sowohl für die Korrektur des Dunkelabtastungswertes (Schwarzkorrektur) als additive Korrektur wie auch für die Weißkorrektur als multiplikative Korrektur einsetzbar.

Das hier vorgestellte Prinzip der Randabdunklungskorrektur arbeitet genauso bei einem Flächensensor (Arrayer CCD). Ein Flächensensor enthält im Unterschied zu einem Zeilensensor eine flächige Anordnung von Photozellen, die gleichzeitig einige wenige Zeilen der Vorlage abtasten können. Die PNRU-Korrektur erfolgt beim Flächensensor nach wie vor eindimensional.

Zur Verdeutlichung der Erfindung wird im Folgenden die Weißkorrektur detailliert beschrieben. Diese Beschreibung geht von einem Zeilensensor aus. Darüber hinaus sind folgende Randbedingungen zu beachten. Eine Beleuchtungseinheit beleuchtet die Vorlage vollständig. Die geometrische Abgleichschrittweite entspricht der Abtastschrittweite (Reduktionsfaktor). Das heißt, bei der Aufnahme der Muster-Abtastwerte müssen die Schrittweiten in Zeilen und Spaltenrichtung die gleichen wie beim Scann sein.

Die Abgleichschrittweite der Helligkeitsnachführung entspricht der Abtastschrittweite der Helligkeitsnachführung. Das heißt, die Helligkeitsnachführung der Vorlage muss beim Abgleich und beim Scann in gleichen Schritten erfolgen. Anders gesagt, die Grauwertsprünge sind gleich groß.

Zunächst werden die Muster-Abtastwerte aufgenommen. Bei der folgenden Erläuterung gilt:

m = Reduktionsfaktor in Pixelrichtung (alle m Pixel)

n = Reduktionsfaktor in Zeilenrichtung (alle n Zeilen)

$\delta$ = Differenz, Schrittweite der Helligkeitsnachführung

Bei der Gewinnung der Muster-Abtastwerte wird ein vollflächig ausgeleuchtete Weißreferenz-Vorlage oder Muster-Vorlage abgetastet. An beliebiger Stelle der Muster-Vorlage wird eine Zeile aufgenommen und für jeden Bildpunkt dieser Zeile (= Pixel) ein Abtastwert oder Weißwert ermittelt und abgespeichert. Mit diesen Werten die PRNU-Korrektur der Sensorelemente durchgeführt. Da die beliebig ausgewählte Referenzzeile nicht frei von der Randabdunklung ist, wird in dieser Zeile der Einfluss der Randabdunklung automatisch mit korrigiert.

Die für diese Referenzzeile ermittelten Korrekturwerte werden für die nächsten n-Zeilen unverändert beibehalten. Nach n-Zeilen wird erneut eine Zeile der Muster-Vorlage abgetastet, und für jedes m-te Pixel der Zeile ein neuer Muster-Abtastwert ermittelt. Nun wird verglichen, ob der neu ermittelte Abtastwert größer oder gleich dem vorhergehenden Abtastwert für dieses Sensorelement ist. Dies kann durch Vergleich der nicht korrigierten oder Rohabtastwerte geschehen, oder die Abtastwerte können durch die bereits gewonnenen ersten Korrekturwerte zunächst korrigiert und dann verglichen werden.

Ist der neue Muster-Abtastwert größer als der Muster-Abtastwert der vorhergehend abgetasteten Musterzeile, wird ein korrigierter Muster-Abtastwert für diese Zeile berechnet, indem der Muster-Abtastwert dieser Zeile um einen bestimmten Differenzbetrag $\delta$ erhöht wird. Für den Fall, dass der Abtastwert kleiner als der vorhergehende Abtastwert ist, erfolgt die Korrektur in entgegengesetzter Richtung. Die Information, ob ein nicht korrigierter Abtastwert größer oder kleiner ist, läßt sich in Form eines einzelnen Bit, einem Richtungs- oder Vorzeichenbit, abspeichern.

Für den Fall, dass sich der Abtastwert nicht geändert hat, ist es wünschenswert, die Korrektur des Abtastwertes wie in der vorher abgetasteten Zeile beizubehalten. Da dies mit einem Bit nicht zu kodieren ist, wird vorzugsweise folgender Ansatz verwendet. Der Korrekturwert wird nur dann erhöht, wenn sowohl der aktuelle als auch der vorangehende Korrekturwert das gleiche Vorzeichen haben.

Dies bewirkt, dass der Korrekturwert einem relativ schnellen Helligkeitsanstieg bzw. Abfall folgen kann, bei leichten Änderungen aber gedämpft wird.

Ein weiterer Vorteil liegt darin, dass, da die erzeugten Muster-Abtastwerte immer von der Muster-Vorlage stammen, auch bei einer kurzzeitigen oder langsamen Nachführung Fehler nicht aufsummiert werden können.

Die so ermittelten Korrekturwerte benötigen x Pixel pro Zeile und y Zeilen pro Auszug insgesamt.

$$\text{Ref, neu} = x \text{ Bytes} + \frac{X * \text{int} ((y-1)/n)}{M} \text{ Bits}$$

$$= x + \frac{x * \text{int} ((y-1/n))}{m * 8} \text{Bytes}$$

Im Folgenden wird die Aufnahme der Referenzdaten beschrieben, wobei der Geometrischer Aufbau der Referenz sich wie folgt darstellt:

PixelNummer

| | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Zeile1 | | | | | | | | | | | | | | | | |
| 2 | | | | | | | | | | | | | | | | |
| 3 | | | | | | | | | | | | | | | | |
| 4 | | | | | | | | | | | | | | | | |
| 5 | | | | | | | | | | | | | | | | |
| 6 | | | | | | | | | | | | | | | | |
| 7 | | | | | | | | | | | | | | | | |
| 8 | | | | | | | | | | | | | | | | |
| 9 | | | | | | | | | | | | | | | | |
| 10 | | | | | | | | | | | | | | | | |
| 11 | | | | | | | | | | | | | | | | |
| 12 | | | | | | | | | | | | | | | | |
| 13 | | | | | | | | | | | | | | | | |
| 14 | | | | | | | | | | | | | | | | |
| 15 | | | | | | | | | | | | | | | | |
| 16 | | | | | | | | | | | | | | | | |
| 17 | | | | | | | | | | | | | | | | |

Eine Bildzeile besteht aus i = x/m "Referenzspalten" sowie aus einer "echten Referenzzeile" plus j = (y-1)/n "Referenz-zeilen".

Hier wird angenommen:

$$m = n = 4,$$

und

$$i = j = 4$$

Die Bedeutung der Felder in der vorstehenden graphischen Darstellung ist wie folgt:

= Pixel mit „echter" Weißreferenz, Gilt für die ganze erste Zeile

= m*n Pixel für welche jeweils ein
Richtungsbit benötigt wird

Breite = „Referenzspaltenbreite"

= n Pixel, welche mit gleicher Referenz korrigiert werden

Höhe n = „Referenzzeilenhöhe"

Ref x,y

Für die Ermittlung einer neuen Referenz gilt dann:

$$Ref_{x,j} = Ref_{x,j-1} + Richtungsbit*d$$

wenn Richtungsbit $_{x,j-2}$ = Richtungsbit $_{x,j-1}$)

Die eigentliche Korrektur eines abgetasteten Bilds erfolgt dann wie folgt.

Während der Auswertung, beziehungsweise während des Scanns werden analog zum Aufnahmeverfahren die Korrekturwerte für die Randabdunklung gleitend ermittelt. Hierzu werden zunächst die Korrekturwerte für die PRNU-Korrektur geladen, die aus der Aufnahme der echten Korrekturzeile der Muster-Vorlage gewonnen wurde. Die ersten n-Zeilen des abgescannten Bildes werden mit diesen Korrekturwerten korrigiert. Nach n-Zeilen werden die zweiten Korrekturwerte berücksichtigt, die für diese Zeile der Muster-Vorlage für m-Pixel gewonnen wurden. Für jeweils m-Pixel entlang der Abtastzeile werden die Korrekturwerte der einzelnen Sensorelemente um δ multipliziert mit dem Richtungsbit geändert. Da das Richtungsbit das Vorzeichen der Änderung angibt, wird die Referenz erhöht oder erniedrigt. Die neu ermittelten Korrekturwerte werden dann für weitere n-Zeilen beibehalten. Nach weiteren n-Zeilen wird die Anpassung der Korrekturwerte erneut vorgenommen.

Das Videobild wird nun auf folgende Art und Weise korrigiert. In der folgenden Gleichung ist auch die Korrektur des Dunkelabtastungswertes mit angegeben.

$$Vid_{Korr} = (Vid_{Roh} - Ref_{Schwarz}) *Korr$$

$$= (Vid_{Roh} - Ref_{Schwarz}) *Vid_{max}/Ref_{weiß}$$

Mit:

Vid$_{Korr}$ = Shading und PRNU-Korrigiertes Videobild

Vid$_{Roh}$ = Video-Rohbild aus der Kamera

Ref$_{Schwarz}$ = Über Differenzverfahren ermittelte Schwarzreferenz

Korr = Korrekturfaktor

Vid$_{Max}$ = maximal erreichbarer Videowert (für Weiß) z.B. 255 in einem 8 Bitsystem

Ref$_{Weiß}$ = über Differenzverfahren ermittelte Weißreferenz

Die Erfindung bietet eine Reihe von Vorteilen. Zunächst wird ein deutlich verringerter Speicherbedarf für die Korrekturdaten erforderlich. Eine zweidimensionale Randabdunklungskorrektur ist mit dem erfindungsgemäßen Verfahren und der erfindungsgemäßen Bildaufnahmevorrichtung auch für größere Bildgrößen realisierbar, etwa für A3 oder größer. Durch die "echte" Korrekturzeile, das heißt für die Musterabtastwerte der Muster-Vorlage, die zur Ermittlung der PRNU-Korrektur dienten, kann dieser PRNU-Effekt der Bildsensorelemente vollständig ausgeregelt werden. Durch das Differenzverfahren ist darüber hinaus eine geringere Übertragungsbandbreite für die Korrekturdaten erforderlich. Unreinheiten und Verschmutzungen der Muster-Vorlage also der Weißreferenz, werden automatisch unterdrückt. Dies ist insbesondere dann effektiv, wenn die "echte" Referenzzeile der Muster-Vorlage über mehrere Zeilen gemittelt wird.

Durch die einstellbare Nachführungsgeschwindigkeit der Korrekturwerte (m, n sind beliebig wählbar) kann die Korrektur an die optischen Gegebenheiten des Systems, wie etwa die Beleuchtungshomogenität, die Geschwindigkeit der Randabdunklung usw., angepasst werden. Auch ist die Schrittweite der Nachführung δ einstellbar. Dies ermöglicht problemlos ein Nachführen mit einer Empfindlichkeit unterhalb des am wenigsten signifikanten Bits (LSB) der Abtastwerte. Beispielsweise ist eine ein Viertel Videobit-Stufe problemlos möglich. Stufigkeiten im Bild können so vermieden werden.

Die eigentliche Korrektureinheit beansprucht nur unwesentlich mehr Hardware als eine eindimensionale Randabdunklungskorrektur und ist somit kostenmäßig anderen Verfahren vorzuziehen. Darüber hinaus eignet sich die Korrektur hervorragend für die Verwirklichung als programmierbare Hardware (FPGA) mit ihren Vorteilen der Rekonfigurierbarkeit und Geschwindigkeit.

Die Erfindung ist darüber hinaus auch bei der Verbesserung der eindimensionalen Korrektur durch Nachführen von Korrekturwerten bei konventionellen Zeilenscannern einsetzbar. Auf diese Art kann beispielsweise das Temperaturverhalten von Leuchtstofflampen berücksichtigt werden. Die bei Scannern oftmals eingesetzten Leuchtstofflampen sind nämlich sehr temperaturabhängig. Die Leuchtstoffe ändern ihren Wirkungsgrad und ihre Farbe in Abhängigkeit der Temperatur. Da diese Leuchtstofflampen, insbesondere Heizkathodenlampen, an den Enden deutlich wärmer als in der Mitte sind, und da sich dieses Temperaturgefälle im Laufe der Einschaltdauer angleicht, ändern sich auch die Lichtfarbe und die Helligkeit über die Einschaltdauer und Lampenlänge. Bei reproduzierbaren Umgebungsbedingungen, wie sie beim Einbau in ein Gerät gegeben sind, können diese Effekte zu großen Teil kompensiert werden.

Bisher mussten Scanner für die Randabdunklungskorrektur zuerst in einem thermisch einigermaßen stabilen Arbeitspunkt vorliegen. Dies kann, je nach Gerät, bis zu einer Stunde und länger dauern. Beim Scannbetrieb eines frisch eingeschalteten Gerätes wurde die Randabdunklungskorrektur fehlerhaft durchgeführt.

Zusammengefasst kann gesagt werden, dass die Erfindung zum einen die PRNU-Korrektur für jedes Pixel einzeln erfasst, während die sich langsam ändernde Randabdunklung unterabgetastet wird.

Das gezeigte Differenzverfahren für die Randabdunklungskorrektur bietet darüber hinaus viele Vorteile. Bei einer Flächenbeleuchtung eines Dokuments ist die Helligkeit vom gleichen Bildpunkt zu benachbarten Zeilen, das heißt, der Helligkeitsverlauf innerhalb einer Bildspalte oder Bildzeile nicht zufällig. Bei einer realen Beleuchtung ist der Helligkeitsunterschied eines Bildpunktes von Zeile zu Zeile nur gering, über das gesamte Bild betrachtet, kann der Unterschied allerdings beachtlich sein. Hier setzt die Nachführung des nächsten Korrekturwertes über die Differenz ein, genauer gesagt, über das Vorzeichen der Differenz zum vorhergehenden Korrekturwert. Die Information kann somit als ein einziges Bit gespeichert werden und benötigt somit einen sehr geringen Speicherbitraum. Durch das beschriebene Verfahren werden die integralen Fehler der Muster-Vorlage gleich Null.

Die Geschwindigkeit der Randabdunklungskorrektur kann in beiden geometrischen Richtung, das heißt in Zeilenrichtung und Spaltenrichtung, getrennt voneinander eingestellt werden. Hiermit kann, je nach Scanner und Beleuchtungsinhomogenität, eine zusätzliche Einsparung der Korrekturwertmenge und des nötigen Speicherplatzes erreicht werden. Je kleiner die benötigte Korrekturdatenmenge ist, um so kleiner wird die Bandbreite für die Übertragung vom Speicher an die Korrektureinheit.

Auch die Schrittweite der Muster-Vorlagennachführung (Grauwertsprung pro Schritt) ist einstellbar und kann auch ein Bruchteil der Videoauflösung (in Bit pro Pixel) betragen. Stufen und Sprünge in der Bildhelligkeit sind somit vermeidbar.

In der folgenden Tabelle sind die bekannten Korrekturverfahren dem erfindungsgemäßen Korrekturverfahren -gegenübergestellt.

1. Ohne Shadingkorrektur
2. Eindimensionale Korrektur (Stand der Technik)
3. Zweidimensionale Korrektur nach dem Verfahren der eindimensionalen Korrektur
4. Zweidimensionale Korrektur nach dem hier vorgestellten Differenzverfahren
5. Zweidimensionale Korrektur nach dem hier vorgestellten Differenzverfahren und zusätzlichem Reduktionsfaktor

Rechenbeispiel:

Bildgröße:    DIN A3 mit Rand (317,5 + 444,5 mm)
Auflösung:    400 dpi (Bildpunkte/Zoll)⇒ 5000*7000 Bildpunkte Bildart: Farbe, 3 Auszüge R,G,B (Bittiefe z.B. 3*8=24 Bit) Bilddaten-
Durchsatz:    10*10^6 RGB-Pixel/Sekunde (3*10=30 MByte/s) 1 Zeile mit 5000 Px in 500µs (2000 Zeilen/sec)

Korrektur: Nur Weiß

| Nummer | 1 | 2 |
|---|---|---|
| Art der Korrektur | Keine Korrektur | Eindimensionale Korrektur |
| Eindruck der Helligkeitshomogenität | Schlecht Helle Bildmitte, deutlicher Helligkeitsabfall zum Rand hin | Etwas besser wie ohne Korrektur (Blendenabhängig) |
| Erforderliche Korrekturdaten [Bytes] | Keine | 15.000 |
| In % von Spalte 3 | --- | --- |
| Bereitstellungsgeschwindigkeit der Korrekturdaten incl. Anfangszeile [Bytes/sec] | Entfällt | Keine (Hat im RefRAM Platz) |
| In % von Spalte 3 | --- | --- |

| Nummer | 3 | 4 | 5 |
|---|---|---|---|
| Art der Korrektur | Zweidimensionale Korrektur nach eindimensionalem Verfahren | Zweidimensionale Korrektur nach Differenzverfahren (ohne Reduktion) | Zweidimensionale Korrektur nach Differenzverfahren und zusätzlichem Reduktionsfaktor M=4, n=4 |
| Eindruck der Helligkeitshomogenität | Sehr gleichmäßig | Von Spalte 3 nicht zu unterscheiden | Bei normaler Beleuchtung von Spalte 3 fast nicht unterscheidbar |
| Erforderliche Korrekturdaten [Bytes] | 105.000.000 | 13.138.125 | 834.844 |
| In % von Spalte 3 | 100 | 12,51 | 0,795 |
| Bereitstellungsgeschwindigkeit der Korrekturdaten incl. Anfangszeile [Bytes/sec] | 30.000.000 | 3.753.750 | 333.938 |
| In % von Spalte 3 | 100 | 12,51 | 1.11 |

Berechnung der Korrekturdatenmenge:

Zu 1.: Keine
Zu 2.: Korrdat = iAuszüge*xPixel/Zeile= 3*5000= 15.000(Bytes)
Zu 3.: Korrdat = iAuszüge*xPixel/Zeile*yZeilen=3*5000*7000= 105.000.000 (Bytes)
Zu 4.:

$$\text{Korrdat} = \text{iAuszüge} * x\text{Bytes} + \frac{x*(y-1)}{1}\text{Bits}) = x + \frac{x*(y-1)}{8}\text{Bytes}$$

$$= 3*(5000 + \frac{5000*(6999)}{8} = 13,138,125 \text{ Bytes}$$

Zu 5.:

$$\text{Korrdat} = \text{iAuszüge} * (x\text{Bytes} + \frac{x*\text{int}((y-1)/n)}{m}\text{ Bits})$$

$$= \text{iAuszüge} * (x + \frac{x*\text{int}((y-1)/n)}{m*8})$$

$$= 3*(5000 + \frac{5000*\text{int}((6999/4))}{4*8}) \text{ Bytes}$$

$$= 3*(5000 + \frac{5000*1749)}{4*8} = 834,844 \text{ Bytes}$$

Obwohl die Erfindung anhand eines Ausführungsbeispieles beschrieben wurde, ist sie hierauf nicht beschränkt. Beispielsweise können anstelle des erwähnten Zeilensensors auch Flächensensoren verwendet werden.

**Patentansprüche**

1. Bildaufnahmevorrichtung mit einem Sensor (2) mit einer Vielzahl von Sensorelementen und einer Steuerung (6) zur Steuerung des Sensors (2) und zur Verarbeitung von durch die Sensorelemente erhaltenen Abtastwerte einer Vorlage, wobei die Steuerung (6) ausgestaltet ist, um die durch Unregelmäßigkeiten der Sensorelemente und durch Randabdunklung verursachten Helligkeitsunterschiede der Abtastwerte auszugleichen und um erste Korrekturwerte für ein jedes Sensorelement, beruhend auf Musterabtastwerten eines Teils einer Muster-Vorlage, zu berechnen,
   **dadurch gekennzeichnet, dass**
   die Steuerung desweiteren ausgebildet ist, um folgende Schritte auszuführen:

   Berechnen zweiter Korrekturwerte für eine Vielzahl benachbarter Abtastwerte beruhend auf weiteren Muster-Abtastwerten und
   Korrektur der Abtastwerte der Vorlage, beruhend auf den ersten und zweiten Korrekturwerten.

2. Bildaufnahmevorrichtung nach Anspruch 1,
   **dadurch gekennzeichnet, dass**
   die zweiten Korrekturwerte Vorzeichen sind, die die Änderungsrichtung der zweiten Korrekturwerte um eine vorgegebene Differenz angeben.

3. Bildaufnahmevorrichtung nach Anspruch 2,
   **dadurch gekennzeichnet, dass**
   die Korrektur der Abtastwerte mit den zweiten Korrekturwerten nur dann durchgeführt wird, wenn zwei aufeinanderfolgende Korrekturwerte das gleiche Vorzeichen anzeigen.

4. Bildaufnahmevorrichtung nach Anspruch 1,
   **dadurch gekennzeichnet, dass**
   die Sensorelemente Photozellen eines CCD-Zeilen- oder Flächensensors sind.

5. Bildaufnahmevorrichtung nach Anspruch 1,
   **dadurch gekennzeichnet, dass**
   die Vorrichtung als Flachbettscanner ausgestaltet ist.

6. Verfahren zur Korrektur der Abtastwerte einer Bildaufnahmevorrichtung mit den Schritten:

   Aufnahme von Muster-Abtastwerten eines Teils einer Muster-Vorlage,
   Berechnen erster Korrekturwerte für jedes Sensorelement der Aufnahmevorrichtung, um Helligkeitsunterschiede aufgrund unterschiedlicher Empfindlichkeit der einzelnen Sensorelemente auszugleichen,

Aufnahme von weiteren Musterabtastwerten der Muster-Vorlage, Berechnen zweiter Korrekturwerte für jeweils eine Vielzahl benachbarter Abtastwerte, beruhend auf den weiteren Musterabtastwerten, um Helligkeitsunterschiede aufgrund der Randabdunklung auszugleichen,

Korrektur der Abtastwerte einer Vorlage mittels der ersten und zweiten Korrekturwerte.

**7.** Verfahren nach Anspruch 6,
**dadurch gekennzeichnet, dass**
die zweiten Korrekturwerte Vorzeichen sind, die die Anderungsrichtung der zweiten Korrekturwerte um eine vorgegebene Differenz angeben.

**8.** Verfahren nach Anspruch 6,
**dadurch gekennzeichnet, dass**
die Korrektur der Abtastwerte mit den zweiten Korrekturwerten nur dann eine Änderung des korrigierten Abtastwertes bewirken, wenn zwei aufeinanderfolgende Korrekturwerte die gleichen Vorzeichen haben.

**9.** Verfahren nach Anspruch 6,
**dadurch gekennzeichnet, dass**
die Sensorelemente Photozellen eines CCD-Zeilen- oder Flächensensors sind.

**10.** Verfahren nach Anspruch 6,
**dadurch gekennzeichnet, dass**
die Bildaufnahmevorrichtung als Flachbettscanner ausgestaltet ist.

**11.** Verfahren nach Anspruch 6, bei dem die Korrektur beruhend auf folgender Gleichung durchgeführt wird:

$$Vid_{Korr/n.m} = (Vid_{Roh/n.m} - Ref_{Schwarz/m})\, Vid_{max} / Ref_{weiß/n.m}$$

wobei:

$Vid_{Korr/n.m}$ der korrigierte Abtastwert an der Stelle n,m
$Vid_{Roh/n.m}$ der nicht korrigierte Abtastwert an der Stelle n,m
$Ref_{Schwarz/m}$ der Dunkelstromwert des m.Sensorelements, und
$Vid_{max}$ der maximal Wert aller Muster-Abtastwerte sind,

und wobei

$$Ref_{weiß/n.m} = Vid_{ref/m} + k_n\, \delta$$

ist, und wobei

$Vid_{ref/m}$ der Muster-Abtastwert des m. Sensorelementes
$k_n$ der Wert der Aufsummierten zweiten Korrekturwerte für die Abtastwerte der n. Gruppe und
$\delta$ der Differenzwert sind.

**Claims**

**1.** Image recording device comprising a sensor (2) with a plurality of sensor elements and a control unit (6) for controlling the sensor (2) and for processing scanning values of an original, which scanning values have been obtained by the sensor elements, the control unit (6) being designed so as to compensate for the brightness differences of the scanning values caused by irregularities of the sensor elements and by marginal darkening, and to calculate first correction values for each sensor element on the basis of sample scanning values of a part of a sample original,
**characterized in that**
the control unit is further designed so as to implement the following steps:

calculating second correction values for a plurality of adjacent scanning values on the basis of further sample

**13**

scanning values and correcting the scanning values of the original on the basis of the first and second correction values.

2. Image recording device according to claim 1,
   **characterized in that**
   the second correction values are operational signs which indicate the direction of change of the second correction values by a predetermined difference.

3. Image recording device according to claim 2,
   **characterized in that**
   the correction of the scanning values using the second correction values is only implemented when two successive correction values have the same operational sign.

4. Image recording device according to claim 1,
   **characterized in that**
   the sensor elements are photocells of a CCD line or area sensor.

5. Image recording device according to claim 1,
   **characterized in that**
   the device is designed as a flatbed scanner.

6. Method for correcting the scanning values of an image recording device comprising the steps:

   recording sample scanning values of a part of a sample original,
   calculating first correction values for each sensor element of the recording device in order to compensate for brightness differences owing to different sensitivity of the individual sensor elements,
   recording further sample scanning values of the sample original,
   calculating second correction values for a plurality of adjacent scanning values each on the basis of the further sample scanning values, in order to compensate for brightness differences owing to the marginal darkening,
   correcting the scanning values of an original by means of the first and second correction values.

7. Method according to claim 6,
   **characterized in that**
   the second correction values are operational signs that indicate the direction of change of the second correction values by a predetermined difference.

8. Method according to claim 6,
   **characterized in that**
   the correction of the scanning values using the second correction values only effects a change of the corrected scanning value if two successive correction values have the same operational signs.

9. Method according to claim 6,
   **characterized in that**
   the sensor elements are photocells of a CCD line or area sensor.

10. Method according to claim 6,
    **characterized in that**
    the image recording device is designed as a flatbed scanner.

11. Method according to claim 6, in which the correction is carried out on the basis of the following equation:

$$Vid_{Korr/n.m} = (Vid_{Roh/n.m} - Ref_{Schwarz/m})\, Vid_{max} / Ref_{wei\text{ß}/n.m}$$

where:

$Vid_{Korr/n.m}$ is the corrected scanning value at the point n,m
$Vid_{Roh/n.m}$ is the non-corrected scanning value at the point n,m

Ref$_{Schwarz/m}$ is the dark current value of the m.sensor element, and
Vid$_{max}$ is the maximum value of all sample scanning values

and where

$$Ref_{weiß/n.m} = Vid_{ref/m} + k_n \; \delta$$

and where

Vid$_{ref/m}$ is the sample scanning value of the m. sensor element,
k$_n$ is the value of the summed up second correction values for the scanning values of the n. group, and
$\delta$ is the difference value.

## Revendications

1. Dispositif d'enregistrement d'une image, comprenant un capteur (2) comportant un grand nombre d'éléments de capteur, et une commande (6) destinée à commander le capteur (2) et à traiter des valeurs d'exploration d'un document original obtenues par les éléments de capteur, la commande (6) étant conformée pour compenser des différences de luminosité des valeurs d'exploration ayant pour origine l'absence d'uniformité entre les éléments de capteur et un obscurcissement en bordure, et pour calculer des premières valeurs de correction pour chaque élément de capteur en se fondant sur des valeurs d'exploration d'une partie d'un document original, **caractérisé en ce que** la commande est en outre conformée pour réaliser les étapes suivantes consistant à :

   calculer des deuxièmes valeurs de correction pour un grand nombre de valeurs de d'exploration voisines en se fondant sur d'autres valeurs d'exploration du document original, et
   corriger les valeurs d'exploration du document original en se fondant sur les premières et deuxièmes valeurs de correction.

2. Dispositif d'enregistrement d'une image selon la revendication 1, **caractérisé en ce que** les deuxièmes valeurs de correction sont des signes qui indiquent le sens de variation des deuxièmes valeurs de correction d'une différence prédéterminée.

3. Dispositif d'enregistrement d'une image selon la revendication 2, **caractérisée en ce que** la correction des valeurs d'exploration avec les deuxièmes valeurs de correction n'est effectuée que lorsque deux valeurs de correction successives sont de même signe.

4. Dispositif d'enregistrement d'une image selon la revendication 1, **caractérisé en ce que** les éléments de capteur sont des photocellules d'un capteur plan ou à lignes CCD.

5. Dispositif d'enregistrement d'une image selon la revendication 1, **caractérisé en ce que** le dispositif est conformé en numériseur à plat.

6. Procédé de correction des valeurs d'exploration d'un dispositif d'enregistrement d'une image, comportant les étapes consistant à :

   recevoir des valeurs d'exploration d'une partie d'un document original,
   calculer des premières valeurs de correction pour chaque élément de capteur du dispositif d'enregistrement afin de compenser des différences de luminosité dues à la sensibilité différente des éléments de capteur individuels,
   recevoir d'autres valeurs d'exploration du document original,
   calculer des deuxièmes valeurs de correction à chaque fois pour un grand nombre de valeurs d'exploration voisines, en se fondant sur les autres valeurs d'exploration du document original afin de compenser les différences de luminosité dues à l'obscurcissement en bordure,
   corriger les valeurs d'exploration du document original au moyen des premières et deuxièmes valeurs de correction.

7. Procédé selon la revendication 6, **caractérisé en ce que** les deuxièmes valeurs de correction sont des signes qui indiquent le sens de variation des deuxièmes valeurs de correction d'une différence prédéterminée.

8. Procédé selon la revendication 6, **caractérisé en ce que** la correction des valeurs d'exploration avec les deuxièmes valeurs de correction ne provoque une variation de la valeur d'exploration corrigée que lorsque deux valeurs de correction successives sont de même signe.

9. Procédé selon la revendication 6, **caractérisé en ce que** les éléments de capteur sont des photocellules d'un capteur plan ou à lignes CCD.

10. Procédé selon la revendication 6, **caractérisé en ce que** le dispositif de réception d'image est conformé en numériseur à plat.

11. Procédé selon la revendication 6, dans lequel la correction est réalisée en se fondant sur l'équation suivante :

$$Vid_{Corr/n.m} = (Vid_{Brut/n.m} - Ref_{Noir/m}) \, Vid_{max} \, / \, Ref_{Blanc/n.m}$$

où :

$Vid_{Corr/n.m}$ est la valeur d'exploration corrigée à l'emplacement n,m
$Vid_{Brut/n.m}$ est la valeur d'exploration non corrigée à l'emplacement n,m
$Ref_{Noir/m}$ est la valeur de courant d'obscurité du $m^{ième}$ élément de capteur, et
$Vid_{max}$ est la valeur maximale de toutes les valeurs d'exploration du document original,

où

$$Ref_{Blanc/n.m} = Vid_{Ref/m} + k_n \, \delta$$

où

$Vid_{Ref/m}$ est la valeur d'exploration du document original du $m^{ième}$ élément de capteur,

$k_n$ est la valeur des deuxièmes valeurs de correction sommées pour les valeurs d'exploration du $n^{ième}$ groupe, et

$\delta$ est la valeur de différence.

Fig. 1

Fig. 2

CPU

RAM

ROM

Daten-Ausgabe-Schaltung

Lampen-Steuerung

Lampe

Motor-Steuerung

Motor

Daten-Eingabe-Schaltung

Sensor